# EUROPEAN PATENT APPLICATION

(11) **EP 2 141 835 A1**
(43) Date of publication of application: **06.01.2010**
(21) Application number: 08721994.5
(22) Date of filing: 13.03.2008
(51) Int. Cl.: H04B 10/24, G02B 6/122, G02B 6/42, H04B 10/12, H04B 10/13, H04B 10/135, H04B 10/14

(54) **LIGHT TRANSMISSION SYSTEM AND ELECTRONIC DEVICE**

(30) Priority: 16.03.2007 JP 2007069623
(71) Applicant: Omron Corporation, Kyoto-shi, Kyoto 600-8530 (JP)
(72) Inventor: UNO, Keisuke, Kyoto-shi, Kyoto 600-8530 (JP); HOSOKAWA, Hayami, Kyoto-shi, Kyoto 600-8530 (JP); ISHIDA, Yoshihisa, Kyoto-shi, Kyoto 600-8530 (JP); ENAMI, Akira, Kyoto-shi, Kyoto 600-8530 (JP)
(74) Representative: Giovannini, Francesca
(86) International application number: PCT/JP2008/054590
(87) International publication number: WO 2008/114676

(57) **Abstract**

A light transmission system realizing smaller optical wiring space and enabling bi-directional light transmission inexpensively and at low power consumption is provided. A core (33a) for transmitting a clock signal as an optical signal, a core (33b) for transmitting a data signal or a control signal as the optical signal in a first direction, which is a direction same as a transmission direction of the clock signal, and a core (33c) for transmitting the data signal or the control signal as the optical signal in a second direction, which is an opposite direction to the transmission direction of the clock signal are arranged, where the data signal or the control signal are bi-directionally transmitted by transmitting the data signal or the control signal transmitted in the first direction in synchronization with the clock signal; transmitting the data signal or the control signal transmitted in the second direction in synchronization with the clock signal transmitted through the core (33a), and synchronizing the data signal or the control signal transmitted through the core (33c) with the clock signal transmitted in the first direction.

## Description

### TECHNICAL FIELD

The present invention relates to a light transmission system for bi-directionally transmitting an optical signal, and an electronic device.

### BACKGROUND ART

In recent years, an optical communication network enabling large capacity data communication at high speed is expanding. The optical communication network is assumed to be mounted from intra-devices to inter-device in the future. In the field of optical communication network, a light guide that can be arrayed is expected to realize a print wiring substrate as an optical wiring.

The light guide has a double structure of a center core, which is called a core, and a capsule covering the center core, which is called a clad, where the index of refraction of the core is higher than that of the clad. In other words, the optical signal entered to the core is propagated by repeating total reflection inside the core. Such a light guide is disclosed in Patent Documents 1 and 2.

In recent years, in particular, realization of a flexible optical wiring mounted on a smaller and thinner consumer device with the light guide is desired. In response to this, a light guide having high bendability is being developed by using a material more flexible than the prior art for the material of the core and the clad of the light guide. The data transmission between the substrates in the device can also be carried out with the light guide by using the light guide having high bendability.

A mechanism of light transmission in the light guide module using the light guide will be briefly described. First, a drive portion drives the light emission of the light emitting portion (optical element) based on an externally input electrical signal, and the light emitting portion irradiates the light incident surface of the light guide with light. The light irradiated to the light incident surface of the light guide is introduced into the light guide, and exit from the light exit surface of the light guide. The light exit from the light exit surface of the light guide is received by a light receiving portion (optical element) and converted to an electrical signal.

When performing a bi-directional communication using the light guide, a light transmission method of bi-directionally transmitting a clock signal synchronized with the respective data signal transmitted in bi-direction as described in Patent Document 1 is used for the transmission method.

The light transmission method described in Patent Document 3 bi-directionally light transmits the transfer data and the clock signal synchronized with the transfer data in parallel between a first light transmission device and a second light transmission device.

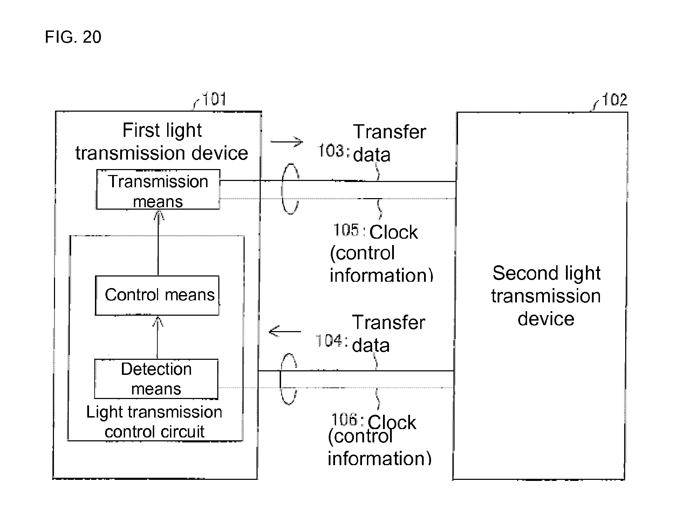

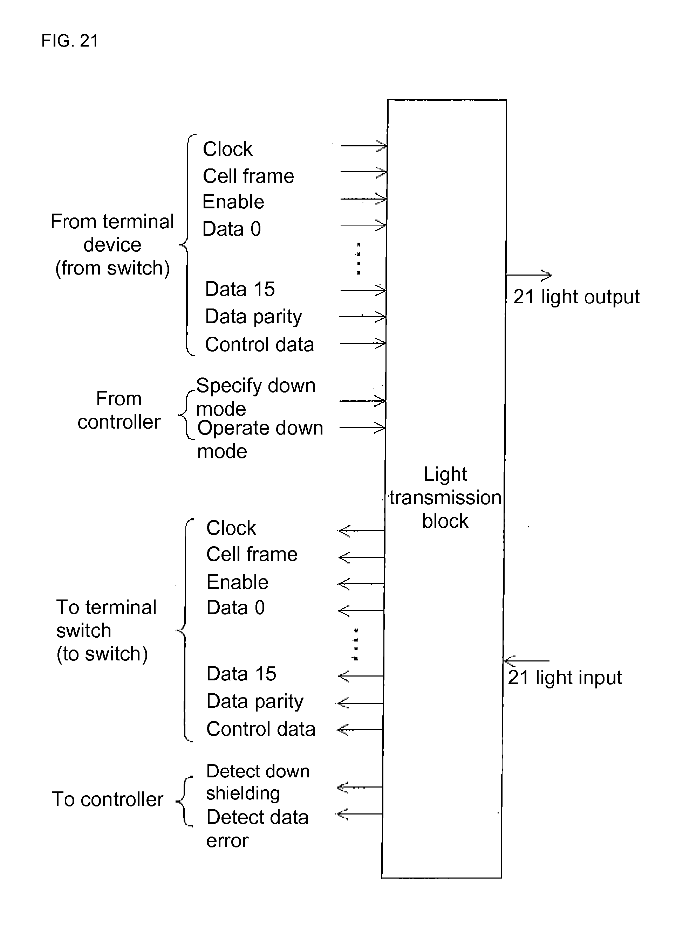

The light transmission method described in Patent Document 3 will be specifically described below using FIG. 20 and FIG. 21. As shown in FIG. 20, there are arranged an optical wiring 103 for transmitting data from the first light transmission device 101 to the second light transmission device 102, an optical wiring 105 for transmitting the clock signal synchronized with the data transmitted through the optical wiring 103, an optical wiring 104 for transmitting data from the second light transmission device 102 to the first light transmission device 101, and an optical wiring 106 for transmitting the clock signal synchronized with the data transmitted through the optical wiring 104. In other words, the light transmission method described in Patent Document 3 requires two clock signal optical wirings, the optical wiring 105 for clock signal from the first light transmission device 101 to the second light transmission device 102 and the optical wiring 106 for clock signal from the second light transmission device 102 to the first light transmission device 101. As shown in FIG. 21, a clock signal line for synchronizing the data with respect to a plurality of data lines from a terminal device is arranged, and a clock signal line for synchronizing the data with respect to a data line from a light transmission block are arranged.

Therefore, when performing the bi-directional communication using the conventional light transmission method, at least two bi-directional data transmission optical wirings and two bi-directional clock signal transmission optical wirings, or a total of four optical wirings, are required.
Patent Document 1: Japanese Laid-Open Patent Publication "Japanese Laid-Open Patent Publication No. 2001-242334 (date of publication: September 7, 2001)".
Patent Document 2: Japanese Laid-Open Patent Publication "Japanese Laid-Open Patent Publication No. 2001-330742 (date of publication: November 30, 2001)".
Patent Document 3: Japanese Laid-Open Patent Publication "Japanese Laid-Open Patent Publication No. 8-293834 (date of publication: November 5, 1996)".

### DISCLOSURE OF THE INVENTION

However, the following problems arise if the conventional transmission method described above is used for the bi-directional communication in the electronic device such as a portable telephone using the light guide.

In the conventional transmission method, at least four optical wirings are required to perform the bi-directional communication, and thus a space for the four optical wirings is required for the optical wiring space. This may become a factor that inhibits miniaturization of the electronic device to be realized using the light guide.

Since power is consumed in O/E conversion and E/O conversion of each optical wiring, the power consumption of the entire device may increase if the number of optical wirings is large. Furthermore, if the optical wiring is in great number, the cost for purchasing the optical wiring may increase.

In view of the above-described conventional problems, it is an object of the present invention to provide a light transmission system capable of realizing smaller space for optical wiring and enabling bi-directional light transmission inexpensively and at low power consumption.

To achieve the above object, the present invention is directed to a light transmission system for transmitting a data signal or a control signal bi-directionally by at least one light transmission module including a light transmission path with a core made of material having translucency and a clad made of material having an index of refraction different from an index of refraction of the core, a light transmission unit with a light emitting portion for irradiating a light incident surface of the light transmission path with an optical signal corresponding to an electrical signal, and a light reception unit with a light receiving portion for receiving the optical signal irradiated from the light emitting portion to the light incident surface of the core and transmitted through the core and outputting an electrical signal corresponding to the optical signal; the light transmission system including: one first core for transmitting a clock signal as the optical signal; at least one second core for transmitting the data signal or the control signal as the optical signal in a first direction, which is a direction same as a transmission direction of the clock signal; and at least one third core for transmitting the data signal or the control signal as the optical signal in a second direction, which is an opposite direction to the transmission direction of the clock signal; wherein the data signal or the control signal are bi-directionally transmitted by, transmitting the data signal or the control signal to be transmitted in the first direction through the second core in synchronization with the clock signal; transmitting the data signal or the control signal to be transmitted in the second direction through the third core in synchronization with the clock signal transmitted through the first core, and synchronizing the data signal or the control signal transmitted through the third core with the clock signal to be transmitted in the first direction.

According to the above configuration, the optical wiring for the clock signal in the opposite direction with respect to the transmission direction of the clock signal is not arranged since signals are transmitted and received while synchronizing the bi-directional signals with the clock signal transmitted in one direction.

Thus, the optical wiring space can be reduced by the optical wiring for the clock signal in the opposite direction with respect to the transmission direction of the clock signal. Therefore, an electronic device such as a portable telephone using the light transmission path can be more miniaturized.

Since power is used for driving the light transmission unit and the light reception unit in the optical wiring, the number of optical wirings can be reduced by not arranging the optical wiring for the clock signal in the opposite direction with respect to the transmission direction of the clock signal, so that the power consumption can be reduced as a result.

Furthermore, since the number of optical wirings can be reduced by not arranging the optical wiring for the clock signal in the opposite direction with respect to the transmission direction of the clock signal, the manufacturing cost of the electronic device such as the portable telephone can be reduced.

In the light transmission system according to the present invention, at least one light transmission path preferably includes at least two cores out of the first core, the second core, and the third core.

According to the above configuration, the number of light transmission modules configuring the light transmission system of the present invention can be reduced since one light transmission path, that is, one light transmission module includes a plurality of cores. Thus, the optical wiring space can be further reduced. Therefore, the electronic device such as the portable telephone using the light transmission path can be more miniaturized.

In the light transmission system according to the present invention, the light emitting portion and the light receiving portion in at least two light transmission modules of the light transmission module including the first core, the light transmission module including the second core, and the light transmission module including the third core are preferably arranged in the same light transmission unit and the same light reception unit, respectively.

According to the above configuration, the variation of the product increases by integrating a plurality of light transmission modules. For instance, with a module in which a light transmission module including a clock core and a light transmission module including a core for transmitting light in a first direction are integrated as one product, and combination can be made such that the transmission direction of other light transmission modules becomes the second direction to obtain the effects of the present invention. A module in which the light transmission module including the clock core, the light transmission module including the core for transmitting light in the first direction, and the light transmission module including the core for transmitting light in the second direction are integrated may be manufactured as a product. Furthermore, the space for installing the optical wiring can be further reduced since any of the light transmission modules can be integrated.

In the light transmission system according to the present invention, when the data signal or the control signal transmitted through the third core is delayed by a time of smaller than or equal to half-cycle of the clock signal with respect to the clock signal transmitted in the first direction, the synchronization of the data signal or the control signal transmitted through the third core and the clock signal transmitted in the first direction is preferably taken at a falling edge of the clock signal.

According to the above configuration, even if the data or the control signal transmitted through the core for transmitting the optical signal of the data or the control signal in the second direction is delayed by a constant time with respect to the clock transmitted in the first direction, synchronization can be correctly taken with respect to the delayed data or the control signal.

The light transmission system according to the present invention further includes a clock inversion circuit for inverting a phase of the clock signal to be transmitted in the first direction when the data signal or the control signal transmitted through the third core is delayed with respect to the clock signal transmitted in the first direction; wherein the synchronization of the data signal or the control signal transmitted through the third core and the clock signal which phase is inverted by the clock inversion circuit is preferably taken at a rising edge of the clock signal which phase is inverted.

According to the above configuration, the falling edge can be converted with the rising edge by inverting the clock signal, and thus the light transmission system of the present invention can be applied to an electronic device including a CPU (Central Processing Unit) and the like that can only take synchronization and/or reading of signal at the rising edge.

The light transmission system according to the present invention preferably includes a delay circuit for delaying the clock signal by a preset time so that the data signal or the control signal transmitted through the third core synchronizes with the clock signal to be transmitted in the first direction when the data signal or the control signal transmitted through the third core is delayed with respect to the clock signal to be transmitted in the first direction.

According to the above configuration, even if the data or the control signal transmitted through the core for transmitting the optical signal of the data or the control signal in the second direction is delayed by a constant time with respect to the clock transmitted in the first direction, synchronization can be correctly taken since the clock transmitted in the first direction is delayed by the time corresponding to the delayed time.

The light transmission system according to the present invention preferably includes a delay circuit for delaying the data signal or the control signal to be transmitted in the second direction by a preset time or delaying the data signal or the control signal transmitted through the third core by a preset time so that the data signal or the control signal transmitted through the third core synchronizes with the clock signal to be transmitted in the first direction when the data signal or the control signal transmitted through the third core is delayed with respect to the clock signal to be transmitted in the first direction.

For instance, when synchronizing the data etc. transmitted in the second direction with the rising edge of a certain pulse of the clock signal of before being transmitted in the first direction, the data etc. transmitted in the second direction delays if the speed of transmitting the data etc. in the second direction is slow, and synchronization may not be taken at the rising edge of the pulse.

However, according to the above configuration, the data etc. to transmit in the second direction or the data etc. transmitted in the second direction can be delayed so that the data signal or the control signal transmitted through the third core synchronizes with the clock signal transmitted in the first direction, and thus synchronization can be taken at the rising edge of the next pulse one cycle after the relevant pulse. Thus, the light transmission system of the present invention can be applied to an electronic device including a CPU and the like that can only take synchronization and/or reading of signal at the rising edge.

In the light transmission system according to the present invention, the delay circuit preferably includes a low pass filter and a waveform shaping circuit.

A method of interiorly including a timer to count the pulse and temporally delay the pulse is considered for the method of delaying the pulse, but in such a case, a logic circuit such as a counter is necessary, which complicates the circuit configuration. If the circuit configuration is complicating, the power consumption may increase.

However, according to the above configuration, the logic circuit such as a counter is unnecessary, and thus the pulse can be delayed with a simple circuit configuration. As a result, a space for installing the delay circuit can be reduced and the power consumption amount can be reduced.

The present invention may be an electronic device including the light transmission system.

As described above, the light transmission system of the present invention includes one core for transmitting a clock signal as a optical signal, at least one second core for transmitting a data signal or a control signal as a optical signal in a first direction, which is a direction same as a transmission direction of the clock signal, and at least one third core for transmitting a data signal or a control signal as an optical signal in a second direction, which is an opposite direction with respect to the transmission direction of the clock signal, where the data signal or the control signal is bi-directionally transmitted by transmitting the data signal or the control signal to be transmitted in the first direction through the second core in synchronization with the clock signal, transmitting the data signal or the control signal to be transmitted in the second direction through the third core in synchronization with the clock signal transmitted through the first core, and synchronizing the data signal or the control signal transmitted through the third core with the clock signal to be transmitted in the first direction.

Therefore, a light transmission system realizing smaller optical wiring space and enabling bi-directional light transmission inexpensively and at low power consumption is provided.

### BRIEF DESCRIPTION OF THE DRAWINGS

FIG. 1 is a diagram showing a schematic configuration of a light transmission system according to the present invention.
FIG. 2(a) is a perspective view showing an outer appearance of a foldable portable telephone including the light transmission system according to the present embodiment, FIG. 2(b) is a perspective plan view of a hinge portion in the foldable portable telephone including the light transmission system according to the present embodiment shown in FIG. 2(a).
FIG. 3 is a diagram showing a schematic configuration of the inside of a portable telephone according to one embodiment of the present invention.
FIG. 4 is a diagram showing a schematic configuration of a light transmission module according to one embodiment of the present invention.
FIG. 5(a) is a view schematically showing a state of light transmission in a light transmission path, and FIG. 5(b) is a cross-sectional view of the light transmission path.
FIG. 6 is a timing chart showing a relationship of the data signal and the clock signal transmitted in the light transmission module according to one embodiment of the present invention.
FIG. 7 is a timing chart showing a relationship of the data signal and the clock signal transmitted in a light transmission module according to another embodiment of the present invention.
FIG. 8 is a diagram showing a schematic configuration of the inside of a portable telephone of another embodiment of the present invention.
FIG. 9 is a timing chart showing a relationship of a data signal and the clock signal transmitted in the light transmission module according to still another embodiment of the present invention.
FIG. 10 is a diagram showing a schematic configuration of the inside of a portable telephone of yet another embodiment of the present invention.
FIG. 11 is a timing chart showing a relationship of a data signal and the clock signal transmitted in the light transmission module according to yet another embodiment of the present invention.
FIG. 12 is a timing chart showing a relationship of a data signal and the clock signal transmitted in the light transmission module according to yet another embodiment of the present invention.
FIG. 13 is a diagram showing a schematic configuration of the light transmission module according to another embodiment of the present invention.
FIG. 14 is a schematic configuration diagram showing another embodiment of the light transmission system according to the present invention.
FIG. 15 is a schematic configuration diagram showing still another embodiment of the light transmission system according to the present invention.
FIG. 16 is a schematic configuration diagram showing yet another embodiment of the light transmission system according to the present invention.
FIG. 17 is a schematic configuration diagram showing yet another embodiment of the light transmission system according to the present invention.
FIG. 18 is a schematic configuration view showing yet another embodiment of the light transmission system according to the present invention.
FIG. 19 is a perspective view showing an outer appearance of a hard disk recording/reproducing device equipped with the light transmission path according to the present embodiment.
FIG. 20 is a block diagram showing a conventional light transmission system.
FIG. 21 is a block diagram showing a conventional light transmission system.

### DESCRIPTION OF SYMBOLS

- 1: light transmission system
- 2: substrate
- 3: substrate
- 4: CPU
- 5,27,31: light transmission processing unit
- 6, 29, 32: light transmission path (light transmission path)
- 7: light reception processing unit
- 8,9,10: light transmission module
- 11: LCD
- 12: camera
- 21: light emitting portion
- 24: light receiving portion
- 33: core
- 33a: core (first core)
- 33b: core (second core)
- 33c: core (third core)
- 34: clad
- 40: portable telephone

### BEST MODE FOR CARRYING OUT THE INVENTION

### [First Embodiment]

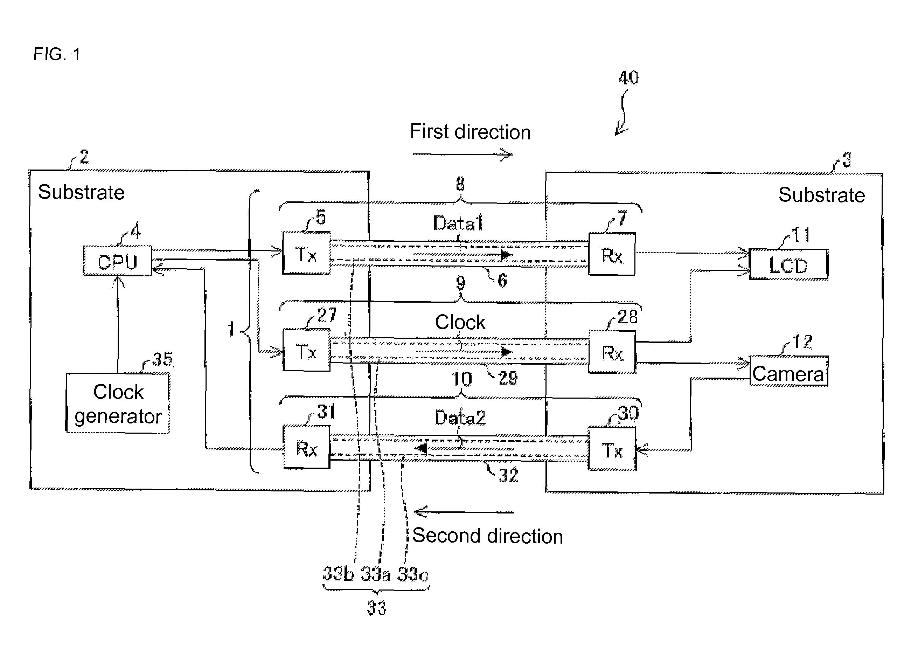

One embodiment of the present invention will be hereinafter described based on FIG. 1 to FIG. 6.

According to the present embodiment, in a foldable portable telephone including a body unit with an operation key, a lid with a display screen, and a hinge portion for rotatably connecting the lid to the body unit, the information transmission between the body unit and the lid is performed through a bi-directional light transmission system arranged in the hinge portion.

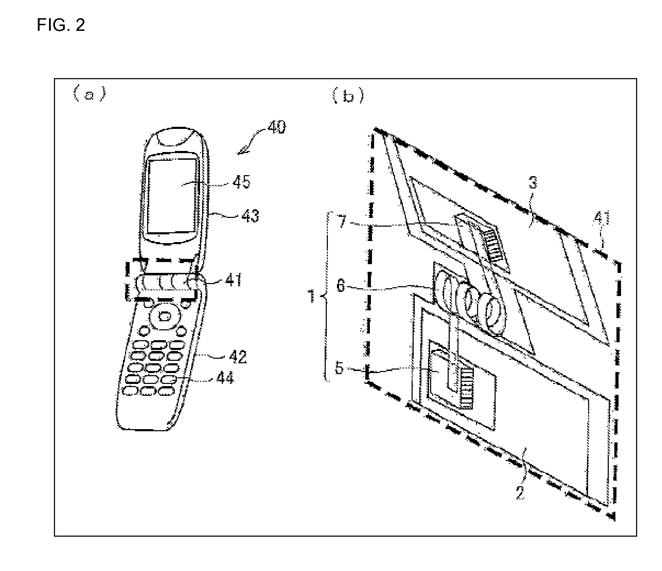

FIG. 1 is a diagram showing a schematic configuration of a light transmission system 1 arranged in a foldable portable telephone 40 of the present embodiment. FIG. 2(a) is a perspective view showing an outer appearance of the foldable portable telephone 40 incorporating the light transmission system 1. FIG. 2(b) is a perspective plan view of FIG. 2(a), that is, a hinge portion 41 (portion surrounded with a broken line) in the foldable portable telephone 40 including the light transmission system 1.

As shown in FIG. 2, the foldable portable telephone 40 (hereinafter simply referred to as the "portable telephone 40") of the present embodiment is configured by a body unit 42, a hinge portion 41 arranged at one end of the body unit 42, and a lid 43 rotatably arranged with the hinge portion 41 as a shaft.

The body unit 42 includes an operation key 44 for operating the portable telephone 40, and interiorly includes a substrate 2 (see FIG. 1). The lid 43 includes a display screen 45 and a camera (not shown), and interiorly includes a substrate 3 (see FIG. 1).

The information transmission of the body unit 42 and the lid 43 is performed through the light transmission system 1 arranged in the hinge portion 41, as shown in FIG. 2(b).

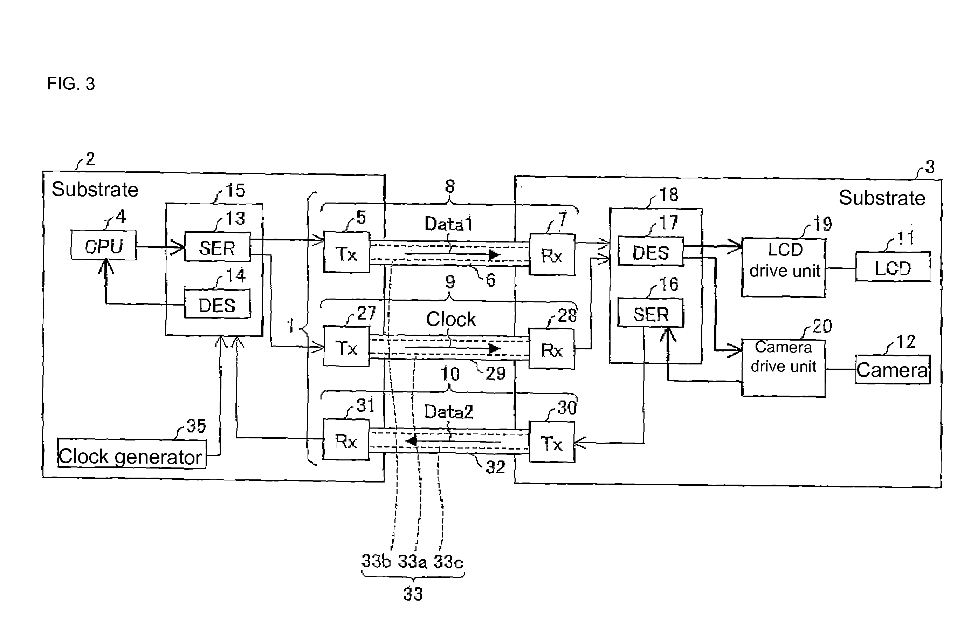

FIG. 3 is a diagram showing a schematic configuration of the inside of the portable telephone 40. The configuration of the inside of the portable telephone 40 will be specifically described using FIG. 3.

As shown in FIG. 3, the substrate 2 on the body unit 42 side includes a CPU 4, which is a control unit, a serial/parallel converter 15, and a clock generator 35 for generating a clock signal.

The serial/parallel converter 15 has a configuration including a serializer 13 for converting a parallel signal to a serial signal (hereinafter referred to as a "serial signal") and a deserializer 14 for converting a serial signal (hereinafter referred to a "serial signal") to a parallel signal (hereinafter referred to as a "parallel signal").

The substrate 3 on the lid 43 side includes a LCD (Liquid Crystal Display) 11 for displaying images based on the image data transferred from the CPU 4, a LCD drive unit 19 for drive controlling the LCD 11, a camera 12 for photographing a subject, a camera drive unit 20 for drive controlling the camera 12, and a serial/parallel converter 18. The serial/parallel converter 18 has a configuration including a serializer 16 and a deserializer 17.

### (Configuration of light transmission system)

The configuration of the light transmission system will now be described.

The light transmission system 1 connects the substrate 2 and the substrate 3, and is used for the information transmission between the body unit 42 and the lid 43. The light transmission system 1 includes a light transmission module 8, which is an optical wiring for transmitting data from the substrate 2 side to the substrate 3 side (first direction), a light transmission module 9, which is an optical wiring for transmitting a clock signal from the substrate 2 side to the substrate 3 side, and a light transmission module 10, which is an optical wiring for transmitting data from the substrate 3 side to the substrate 2 side (second direction).

Specific examples of the data transferred from the substrate 2 side to the substrate 3 side include a drive signal for driving the LCD 11 or the camera 12, image data displayed on the LCD 11, and the like. Specific examples of the data transferred from the substrate 3 side to the substrate 2 side include image data photographed with the camera 12.

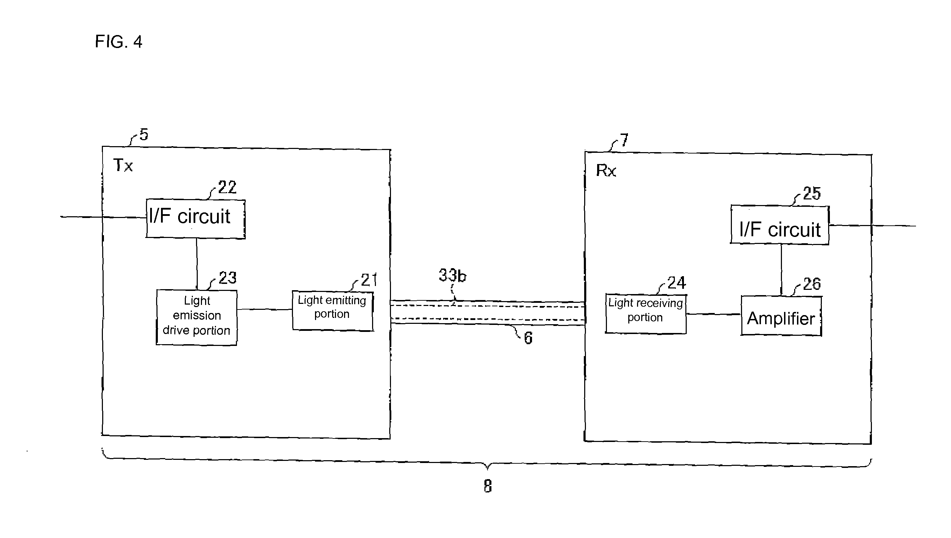

FIG. 4 is a diagram showing a schematic configuration of a light transmission module of the present embodiment.

As shown in FIG. 4, the light transmission module 8 includes a light transmission processing unit 5, a light transmission path 6, and a light reception processing unit 7. The light transmission processing unit (light transmission unit; Tx) 5 includes a light emitting portion 21, an interface circuit 22 (hereinafter referred to as a "I/F circuit"), and a light emission drive portion 23.

The light emitting portion 21 emits light based on the drive control by the light emission drive portion 23. The light emitting portion 21 is configured by a light emitting element such as VCSEL (Vertical Cavity-Surface Emitting Laser).

The I/F circuit 22 electrically connects the electrical wiring of the electrical signal inputted to the light transmission module 8 and the light emission drive portion 23. The light emission drive portion 23 is configured by a light emission drive IC (Integrated Circuit), and drives the light emission of the light emitting portion 21 based on the electrical signal inputted from outside the light transmission module 8.

Therefore, the light transmission processing unit 5 converts the electrical signal inputted to the light transmission processing unit 5 to the optical signal corresponding to the electrical signal, and outputs the same to the light transmission path 6.

The light reception processing unit (light reception unit; Rx) 7 includes a light receiving portion 24, an I/F circuit 25, and an amplifier 26. The light receiving portion 24 is configured by a light receiving element such as PD (Photo-Diode). The I/F circuit 25 is an electrical connecting portion of the electrical wiring for transmitting the electrical signal to outside the light transmission module 8 and the amplifier 24. The amplifier 26 is configured by an amplification IC and the like.

Therefore, the light reception processing unit 7 converts the optical signal outputted from the light transmission path 6 to the electrical signal corresponding to the optical signal, and then amplifies the same to a desired signal value and outputs to the outside.

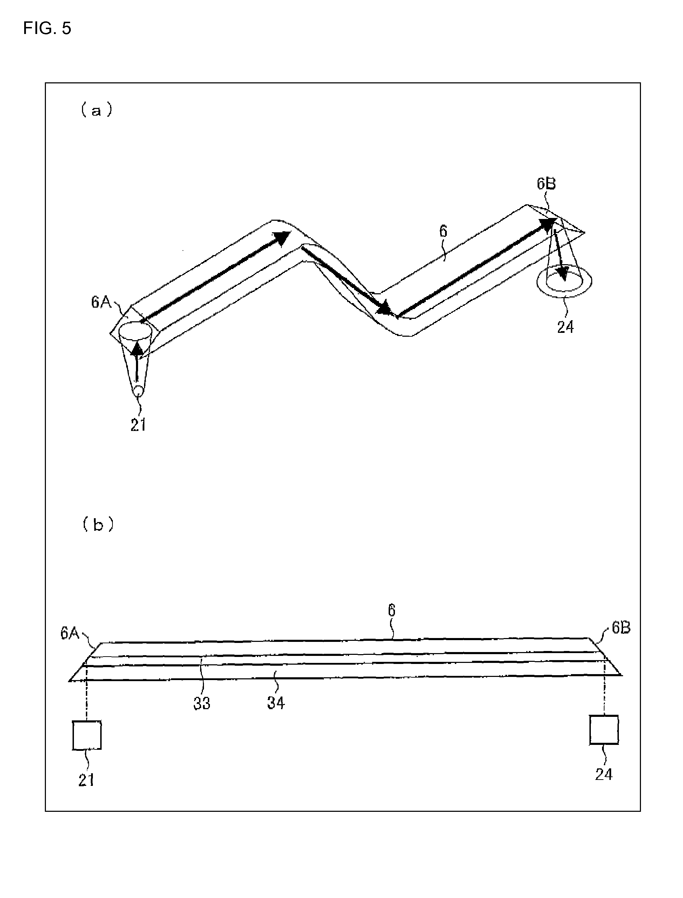

The light transmission path 6 is a medium for transmitting the light exit from the light emitting portion 21 to the light receiving portion 24. The configuration of the light transmission path 6 will be described using FIG. 5.

FIG. 5(a) is a view schematically showing a state of light transmission in the light transmission path 6. FIG. 5(b) is a side view of the light transmission path 6.

The light transmission path 6 is configured by a columnar member having flexibility, and specifically includes a columnar core 33 having the light transmission direction as an axis, and a clad 34 arranged to surround the periphery of the core 33, as shown in FIG. 5 (b). The core 33 and the clad 34 are made of material having translucency, where the index of refraction of the core 33 is higher than the index of refraction of the clad 34. The optical signal entered to the core 33 is transmitted in the light transmission direction by repeating total reflection in the core 33.

Glass, plastic, or the like may be used for the material for forming the core 33 and the clad 34, but resin material such as acryl series, epoxy series, urethane series, and silicone series is preferably used to form the light transmission path 6 having sufficient flexibility.

A light incident surface 6A is arranged at a light incident side end of the light transmission path 6, and a light exit surface 6B is arranged at a light exit side end.

As shown in FIG. 1, the light transmission path 6 of the present embodiment transmits data from the substrate 2 side to the substrate 3 side (first direction) through a core 33b (second core).

The light transmission module 9 includes a light transmission processing unit 27, a light reception processing unit 28, and a light transmission path 29. The light transmission path 29 is configured by a core 33a (first core) for transmitting the clock signal in the first direction (see FIG. 1), and a clad (not shown) arranged to surround the periphery of the core 33a. The clad and the core 33a respectively have the same configuration as the core 33b and the clad 34 of the light transmission path 6.

The light transmission module 10 includes a light transmission processing unit 30, a light reception processing unit 31, and a light transmission path 32. The light transmission path 32 is configured by a core 33c (third core) for transmitting the data in the second direction (see FIG. 1), and a clad (not shown) arranged to surround the periphery of the core 33c. The clad and the core 33c respectively have the same configuration as the core 33b and the clad 34 of the light transmission path 6.

The light transmission processing units 27, 30, and the light reception processing units 28, 31 respectively have the same configuration as the light transmission processing unti 5 and the light reception processing unti 7 of the light transmission module 8, and thus the detailed description will not be given.

### (Operation of light transmission system)

The information transfer between the body unit 42 and the lid 43, that is, between the substrate 2 and the substrate 3 will be described below using FIG. 3, FIG. 4, FIG. 6, and FIG. 7.

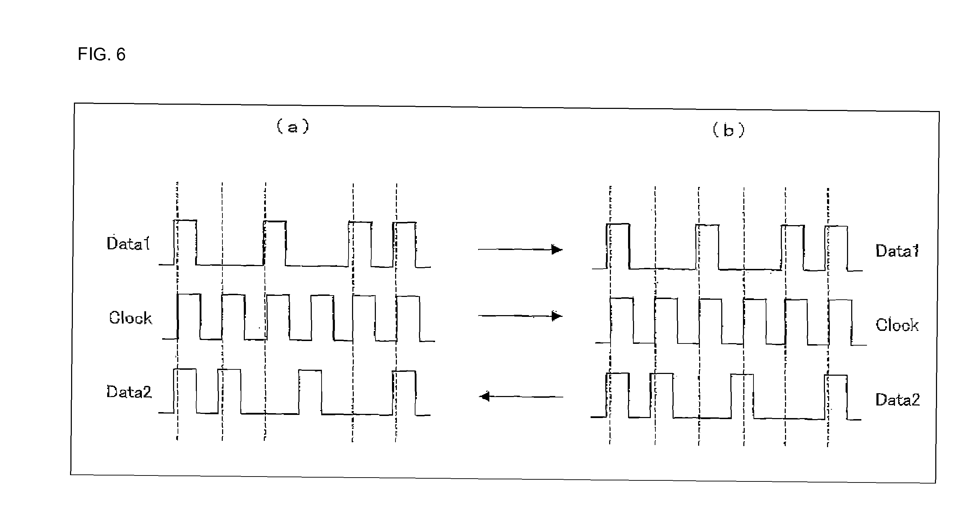

FIG. 6 is a diagram showing a relationship of the data signal and the clock signal transmitted from the substrate 2 side to the substrate 3 side, and the data signal transmitted from the substrate 3 side to the substrate 2 side. FIG. 6(a) is a diagram showing the relationship of each signal on the substrate 2 side, and FIG. 6(b) is a diagram showing the relationship of each signal on the substrate 3 side.

The CPU 4, the LCD drive unit 19, and the camera drive unit 20 of the present embodiment perform data communication with the parallel signal, and perform transmission with the serial signal in the light transmission path 6.

First, a case where the CPU 4 transfers the image data to the LCD drive unit 19 to display images on the LCD 11 will be described using FIG. 3. The CPU 4 outputs the image data signal (Data1) of the image to be displayed on the LCD11 in parallel signal. The Data1 outputted from the CPU 4 is inputted to the serializer 13.

Meanwhile, the clock generator 35 generates the clock signal at a certain constant timing, and outputs the same to the serial/parallel converter 15.

The serial/parallel converter 15 synchronizes the Data1 converted to the serial signal in the serializer 13 with the clock signal acquired from the clock generator 35, and outputs the Data1 to the light transmission processing unit 5 of the light transmission module 8 and outputs the clock signal to the light transmission processing unit 27 of the light transmission module 9.

The relationship of the clock signal generated by the clock generator 35 and the image data signal (Data1) outputted from the CPU 4 is as shown in FIG. 6(a).

As shown in FIG. 6(a), the serial/parallel converter 15 synchronizes the Data1 with the rising edge of the clock signal to synchronize with the clock signal.

The Data1 is inputted to the light emission drive portion 23 through the I/F circuit 22 of the light transmission processing unit 5. The light emitting portion 21 emits light when the light emission drive portion 23 drives the light emitting portion 21. The light incident side end of the light transmission path 6 is irradiated with light exit from the light emitting portion 21 as the optical signal. Specifically, as shown in FIG. 5, the light exit from the light emitting portion 21 enters the light incident side end of the light transmission path 6 from a direction perpendicular to the light transmission direction of the light transmission path 6. The incident light advances through the light transmission path 6 by being reflected at the light incident surface 6A. The light advancing through the light transmission path 6 and reaching the light exit side end is reflected at the light exit surface 6B to be exit in a direction perpendicular to the light transmission direction of the light transmission path 6. The light receiving portion 24 is irradiated with exit light.

The light receiving portion 24 receives the light of the optical signal of Data1 exit from the light exit side end of the light transmission path 6, converts the same to the electrical signal through photoelectric conversion and outputs the electrical signal to the amplifier 26. The amplifier 26 amplifies the electrical signal of the Data1 from the light receiving portion 24, and outputs the same to the serial/parallel converter 18 via the I/F circuit 25.

Since the configuration of the light transmission module 9 and the configuration of the light transmission module 8 are the same, the clock signal inputted to the light transmission processing unit 27 is transmitted to the substrate 3 side through the light transmission module 9, similar to Data1. Specifically, the clock signal is converted to the optical signal in the light transmission processing unit 27, and transmitted to the light reception processing unit 28 through the light transmission path 29. The clock signal inputted to the light reception processing unit 28 is converted to the electrical signal, and outputted to the serial/parallel converter 18.

The serial/parallel converter 18 synchronizes the Data1 of the serial signal transmitted from the substrate 2 side with the inputted clock signal, converts the same to the parallel signal in the deserializer 17 and inputs to the LCD drive unit 19.

The serial/parallel converter 18 synchronizes the Data1 with the rising edge of the clock signal to synchronize the Data1 with the clock signal, similar to the serial/parallel converter 15. This is shown in FIG. 6(b).

The LCD drive unit 19 performs write of the image data and performs the display control of the LCD 11 based on the Data1. The LCD 11 displays the image based on the image data transmitted from the CPU 4 by the control of the LCD drive unit 19.

A case where the image data acquired in the camera 12 is transferred to the CPU 4 will be described below.

The camera 12 outputs the image data signal (Data2) of the image of a subject acquired by photographing to the serializer 16 of the serial/parallel converter 18 through the camera drive unit 20. The serial/parallel converter 18 converts the Data 2 to the serial signal in the serializer 16, synchronizes the converted Data2 with the clock signal transmitted through the light transmission module 9 from the substrate 2 side, and outputs to the light transmission processing unit 30 of the light transmission module 10.

The relationship of the clock signal transmitted through the light transmission module 9 and the image data signal (Data2) outputted from the camera drive unit 20 is as shown in FIG. 6(b).

As shown in FIG. 6(b), the serial/parallel converter 18 synchronizes the Data2 with the rising edge of the clock signal to synchronize with the clock signal.

Similar to the Data1, the Data2 inputted to the light transmission processing unit 30 is converted to the optical signal in the light transmission processing unit 30, and transmitted to the light reception processing unit 31 through the light transmission path 32. The Data2 inputted to the light reception processing unit 31 is converted to the electrical signal, and inputted to the serial/parallel converter 15.

After synchronizing the inputted Data2 with the clock signal of before passing the light transmission module 9 for clock signal, that is, the clock signal directly acquired from the clock generator 35, the serial/parallel converter 15 converts the same to the parallel signal in the deserializer 14 and outputs the parallel signal to the CPU 4.

The relationship of the clock signal generated by the clock generator 35 and the signal of the Data2 transmitted from the camera drive unit 20 through the light transmission module 10 is as shown in FIG. 6(a).

As shown in FIG. 6(a), the serial/parallel converter 15 synchronizes the Data2 with the rising edge of the clock signal.

According to the above configuration, since transmission and reception of data is performed with the data signal transmitted from the substrate 2 side to the substrate 3 side and the data signal transmitted from the substrate 3 side to the substrate 2 side synchronized with the clock signal transmitted in one direction from the substrate 2 side to the substrate 3 side, the clock signal transmitted from the substrate 3 side to the substrate 2 side is unnecessary. In other words, an optical wiring (light transmission module) for clock signal from the substrate 3 side to the substrate 2 side does not need to be arranged. Thus, the optical wiring space can be reduced by the optical wiring for clock signal from the substrate 3 side to the substrate 2 side. Therefore, the portable telephone 40 can be more miniaturized.

As the optical wiring for clock signal from the substrate 3 side to the substrate 2 side does not need to be arranged, the power consumption can be saved by the power used in driving etc. of the optical wiring. Since the cost of the optical wiring for clock signal from the substrate 3 side to the substrate 2 side is unnecessary in the manufacturing process of the portable telephone 40, the manufacturing cost can be reduced.

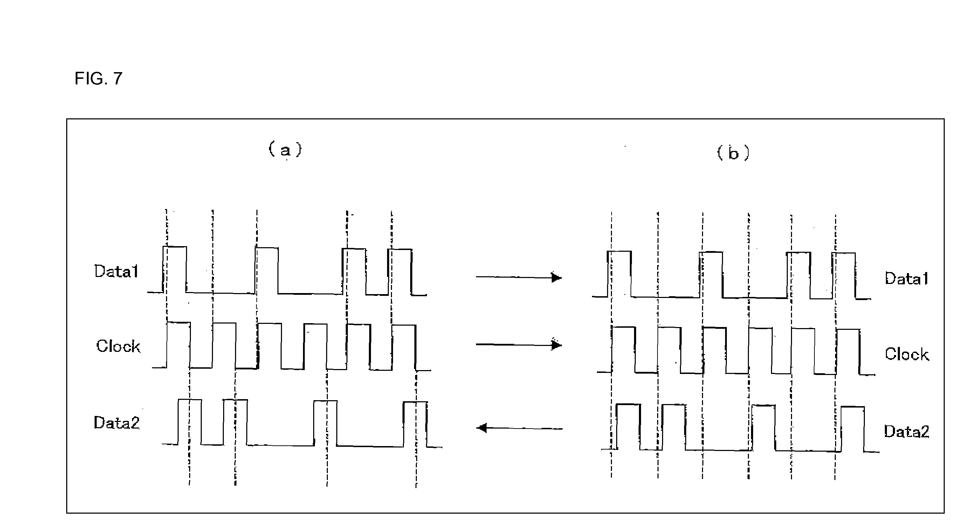

FIG. 7 is a diagram showing a relationship of the data signal and the clock signal transmitted from the substrate 2 side to the substrate 3 side and the data signal transmitted from the substrate 3 side to the substrate 2 side when the operation speed for generating the image data of the camera 12 and/or the transfer speed of the data of the light transmission module 10 are slow.

In the present embodiment, when transmitting the image data from the camera 12 to the CPU 4, the serial/parallel converter 18 synchronizes the Data2 with the rising edge of the clock signal transmitted from the substrate 2 side, and transmits the Data2 to the substrate 2 side. The serial/parallel converter 15 synchronizes the transmitted Data2 with the rising edge of the clock signal generated by the clock generator 35.

However, when the operation speed for generating the image data of the camera 12 and/or the transfer speed of the data of the light transmission module 10 are slow, the Data2 reaching the serial/parallel converter 15 of the substrate 2 is delayed by a certain constant time with respect to the clock signal generated by the clock generator 35. In this case, the Data2 is not yet reached when the serial/parallel converter 15 attempts to synchronize the Data2 with the rising edge of the clock signal, and whether one or zero cannot be correctly read, as shown in FIG. 7(a).

If the delay of the constant time of the Data2 with respect to the clock signal generated by the clock generator 35 is large, the serial/parallel converter 15, 18 may take synchronization with the falling edge which phase is delayed by half-cycle. This is limited to if the delay of the constant time is within half-cycle of the clock signal.

According to the above configuration, the correct value can be read with respect to the delayed Data2 even if the Data2 is delayed by a certain constant time with respect to the clock signal generated by the clock generator 35.

### [Second Embodiment]

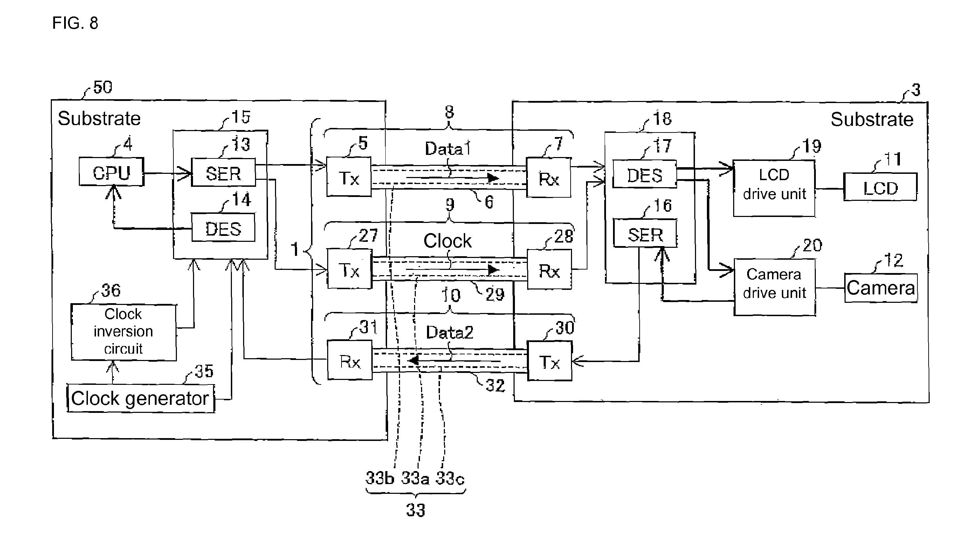

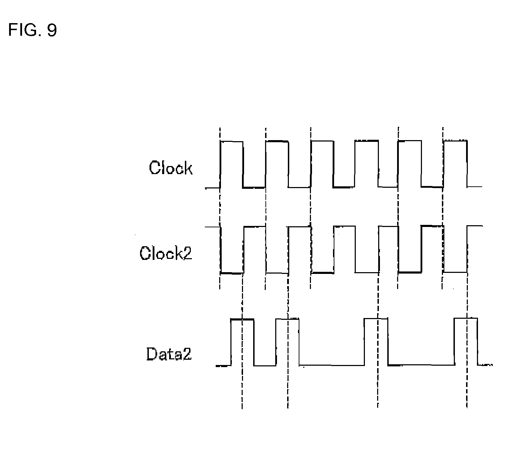

In the present embodiment, with respect to a case where the serial/parallel converter 15 needs to synchronize with the falling edge as the delay of the Data2 with respect to the clock signal generated in the clock generator 35 is large, a case of inverting the value of one and zero of the clock signal by a clock inversion circuit and switching over to synchronize with the rising edge will be described using FIG. 8 and FIG. 9.

The portable telephone of the present embodiment differs from the portable telephone 40 of the first embodiment in including a substrate 50 with a clock inversion circuit 36, but other configurations are the same configurations as the portable telephone 40 of the first embodiment. In the present embodiment, the description on the configurations same as the portable telephone 40 of the first embodiment will not be given.

FIG. 8 is a diagram showing a schematic configuration of the inside of the portable telephone of the present embodiment.

FIG. 9 is a diagram showing a relationship of a clock signal (Clock) generated by the clock generator 35, a clock signal (Clock2) in which the phase of the clock signal generated from the clock generator 35 is inverted, and Data2 transmitted from the substrate 3 through the light transmission module 10.

As shown in FIG. 8, the substrate 50 of the portable telephone according to the present embodiment includes the CPU 4 serving as a control unit, the serial/parallel converter 15, the clock generator 35 for generating the clock signal, and the clock inversion circuit 36 for inverting the value of one and zero of the clock signal. The serial/parallel converter 15 is configured to include the serializer 13 and the deserializer 14.

The clock inversion circuit 36 is a circuit for generating the clock signal (Clock2) in which the phase of the clock signal (Clock) generated by the clock generator 35 is inverted.

The specific operation of the clock inversion circuit 36 in a case where the image data acquired by the camera 12 is transferred to the CPU 4 will be described below.

The camera 12 outputs the image data signal (Data2) of the image of the subject acquired by photographing to the serializer 16 of the serial/parallel converter 18 through the camera drive unit 20. The serial/parallel converter 18 converts the Data2 to the serial signal with the serializer 16, synchronizes the converted Data2 with the clock signal (Clock) transmitted through the light transmission module 9 from the substrate 50 side, and outputs to the light transmission processing unit 30 of the light transmission module 10.

The Data2 inputted to the light transmission processing unit 30 is converted to a optical signal in the light transmission processing unit 30, similar to Data1, and transmitted to the light reception processing unit 31 through the light transmission path 32. The Data2 inputted to the light reception processing unit 31 is converted to the electrical signal, and inputted to the serial/parallel converter 15.

The serial/parallel converter 15 synchronizes the inputted Data2 with the clock signal inputted to the serial/parallel converter 15 through the clock inversion circuit 36 of the signals generated from the clock generator 35, that is, the inverted clock signal (Clock2), which the phase is inverted. The serial/parallel converter 15 converts the Data2 synchronized with the inverted clock signal (Clock2) to the parallel signal with the deserializer 14, and outputs the parallel signal to the CPU 4. The synchronization in this case is taken at the rising edge of the inverted clock signal.

The relationship of the clock signal (Clock) generated by the clock generator 35, the inverted clock signal (Clock2), and the image data signal (Data2) transmitted from the substrate 3 side is as shown in FIG. 9.

According to the above-described configuration, the falling edge can be converted with the rising edge by inverting the clock signal, and thus synchronization can be taken and reading can be made with the falling edge even with respect to the serial/parallel converter 15 that can take synchronization only with the rising edge or the CPU 4 that can make reading only with the rising edge.

Furthermore, assumption is made that the clock inversion circuit 36 is constantly activated in the present embodiment, but the clock inversion circuit of the present invention is not limited thereto, and the clock inversion circuit may be activated when the camera side retrieves the image of the subject.

### [Third Embodiment]

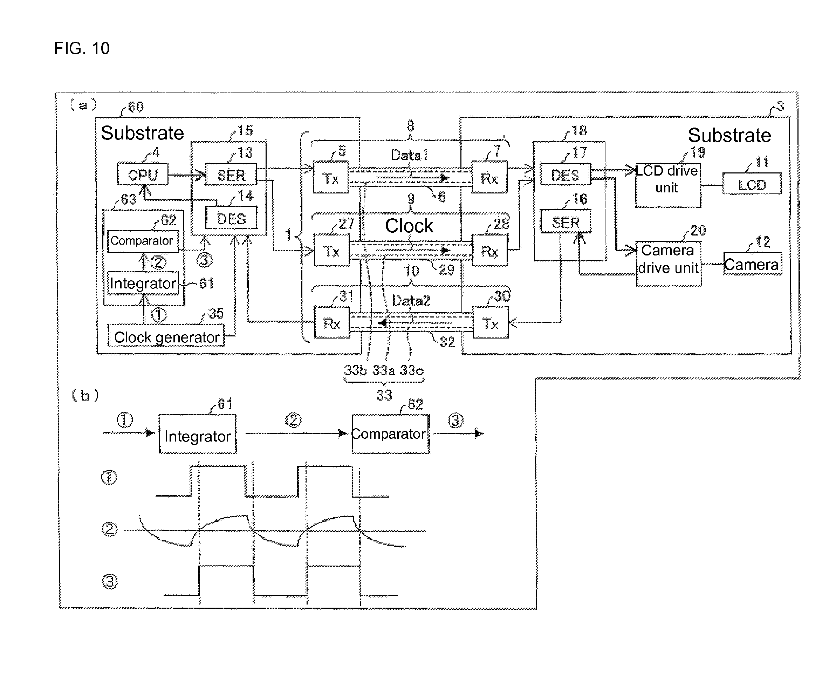

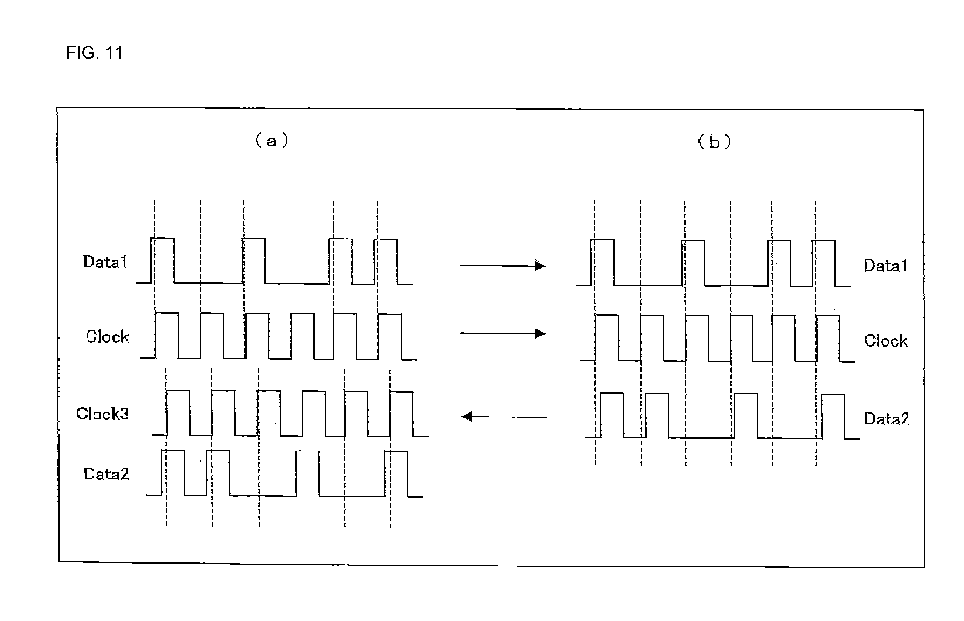

In the present embodiment, with respect to a case where there is a need to synchronize with the falling edge as the delay of the Data2 with respect to the clock signal generated in the clock generator 35 is large, a case of delaying the clock signal with an integrator and a comparator and synchronizing the Data2 with the rising edge will be described using FIG. 10 and FIG. 11.

The portable telephone of the present embodiment differs from the portable telephone 40 of the first embodiment in including a substrate 60 with a delay circuit 63, but other configurations are the same configurations as the portable telephone 40 of the first embodiment. In the present embodiment, the description on the configurations same as the portable telephone 40 of the first embodiment will not be given.

FIG. 10(a) is a diagram showing a schematic configuration of the inside of the portable telephone of the present embodiment, and FIG. 10(b) is a diagram showing a state in which the clock signal is delayed by the delay circuit 63 including an integrator (low-pass filter) 61 and a comparator (waveform shaping circuit) 62.

FIG. 11 is a diagram showing a relationship of a clock signal (Clock) generated by the clock generator 35, a clock signal (Clock3) in which the clock signal (Clock) is delayed by the integrator etc., and Data2 transmitted from the substrate 3 through the light transmission module 10.

As shown in FIG. 10(a), the substrate 60 of the portable telephone according to the present embodiment includes the CPU 4 serving as a control unit, the serial/parallel converter 15, the clock generator 35 for generating the clock signal, and the delay circuit 63. The serial/parallel converter 15 is configured to include the serializer 13 and the deserializer 14. The delay circuit 63 interiorly includes the integrator 61 and the comparator 62.

The integrator 61 integrates the pulse of the clock generated by the clock generator 35, and specifically includes the low-pass filter. The comparator 62 shapes the integrated pulse. The clock signal can be delayed by the integrator 61 and the comparator 62. Specifically, as shown in FIG. 10(b), the state of the clock signal before being inputted to the integrator 61 is (1) but the state of the pulse of the clock signal transitions to the state of (2) when integrated by the integrator 61. In this state, the clock signal is not recognized as a pulse, and thus is shaped so as to be recognized as a pulse using the comparator 62, whereby the state of the pulse transitions to the state of (3). As shown in (1) and (3) of FIG. 10(b), the pulse (3) integrated and shaped by the integrator 61 and the comparator 62 is delayed than the pulse (1) of before being inputted to the integrator 61 and the comparator 62. The clock signal generated by the integrator 61 and the comparator 62 delayed with respect to the clock signal (Clock) generated by the clock generator 35 is assumed as the delayed clock signal (Clock3).

The specific operation of the integrator 61 and the comparator 62 in the case where the image data acquired by the camera 12 is transferred to the CPU 4 will be described using FIG. 10(a).

The camera 12 outputs the image data signal (Data2) of the image of the subject acquired by photographing to the serializer 16 of the serial/parallel converter 18 through the camera drive unit 20. The serial/parallel converter 18 converts the Data2 to the serial signal with the serializer 16, synchronizes the converted Data2 with the clock signal (Clock) transmitted through the light transmission module 9 from the substrate 60 side, and outputs to the light transmission processing unit 30 of the light transmission module 10.

The Data2 inputted to the light transmission processing unit 30 is converted to a optical signal in the light transmission processing unit 30, similar to Data1, and transmitted to the light reception processing unit 31 through the light transmission path 32. The Data2 inputted to the light reception processing unit 31 is converted to the electrical signal, and inputted to the serial/parallel converter 15.

The serial/parallel converter 15 synchronizes the inputted Data2 with the delayed clock signal (Clock3) inputted to the serial/parallel converter 15 through the integrator 61 and the comparator 62 of the signals generated from the clock generator 35. The serial/parallel converter 15 converts the Data2 synchronized with the delayed clock signal (Clock3) to the parallel signal with the deserializer 14, and outputs the parallel signal to the CPU 4.

According to the above-described configuration, the delayed Data2 can be synchronized with the rising edge instead of the falling edge since the clock signal can be delayed.

Therefore, synchronization can be taken and reading can be made with the falling edge even with respect to the serial/parallel converter 15 that can take synchronization only with the rising edge or the CPU 4 that can make reading only with the rising edge.

Furthermore, assumption is made that the integrator 61 and the comparator 62 are constantly activated in the present embodiment, but the low-pass filter (correspond to integrator 61) and the waveform shaping circuit (correspond to comparator 62) of the present invention are not limited thereto, and the low-pass filter and the waveform shaping circuit may be activated when the camera side retrieves the image of the subject.

In the third embodiment, a case in which the clock signal is delayed by the integrator and the comparator and the synchronization with the Data2 is taken with the rising edge has been described, but the present invention is not limited thereto, and the Data2 may be delayed. This will be specifically described below using the configuration same as FIG. 3, that is, the first embodiment.

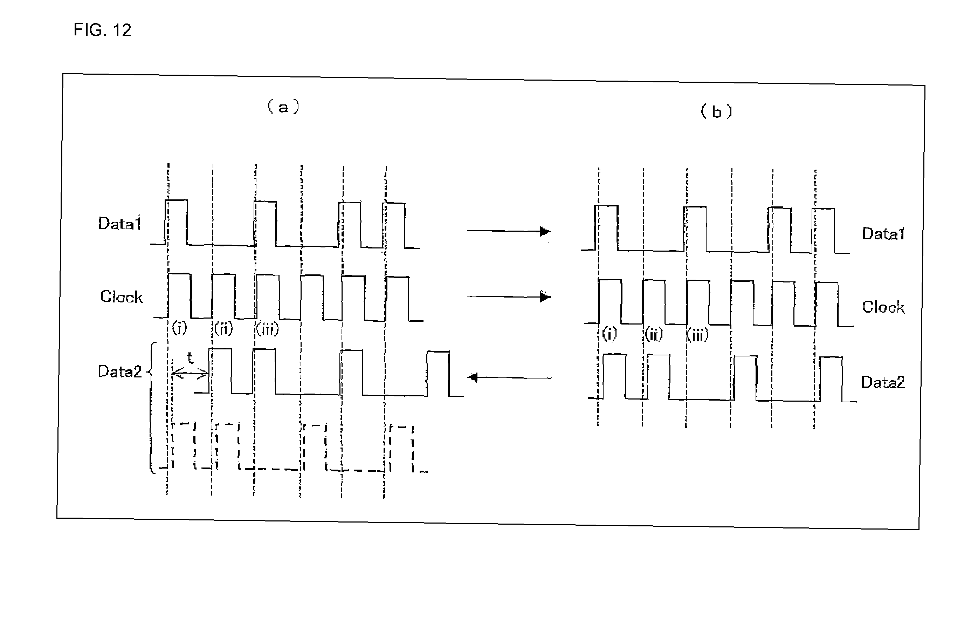

FIG. 12 is a diagram showing a relationship of the Data1 transmitted from the substrate 2 side to the substrate 3 side, the clock signal (Clock) generated by the clock generator 35, and the Data2 transmitted from the substrate 3 side to the substrate 2 side.

If the Data2 is delayed by a certain time with respect to the clock signal generated by the clock generator 35, the Data2 may be delayed in advance in view of the delay of the Data2 by the transfer speed of the data of the light transmission module 10, as shown in FIG. 12. Specifically, as shown in FIG. 12(b), the Data2 is delayed with respect to the clock signal when attempting to be synchronized with the rising edge of the clock signal (i), and thus the serial/parallel converter 15 cannot correctly read whether one or zero of the Data2. The serial/parallel converter 15 thus may delay the Data2 by time t in advance to synchronize with the rising edge of the next clock signal (ii), as shown in FIG. 12(a) when synchronizing the Data2 with the clock signal.

The Data2 may be delayed in advance by time t when synchronizing the Data2 with the clock signal and transmitting in the direction of the substrate 2 in the serial/parallel converter 18.

The delay circuit 63 used to delay the clock signal in the third embodiment may be used to delay the Data2 by time t in advance. In this case, the substrate 2 may include the delay circuit 63 when delaying the Data2 in synchronization in the serial/parallel converter 15, or the substrate 3 may include the delay circuit 63 when delaying the Data2 in synchronization in the serial/parallel converter 18.

The time t can be appropriately changed according to the transfer speed of the data of the light transmission module 10.

According to the above configuration, the correct value can be read with respect to the delayed Data2 even if the Data2 is delayed by a constant time with respect to the clock signal generated by the clock generator 35. Synchronization can be taken even in the serial/parallel converter 15 that can take synchronization only with the rising edge, that is, that cannot take synchronization with the falling edge, and the correct value can be read with respect to the delayed Data2.

In the first to third embodiments, the light transmission system configured by three light transmission modules of the light transmission module 8 for transmitting the data signal from the substrate 2 side to the substrate 3 side, the light transmission module 9 for transmitting the clock signal, and the light transmission module 10 for transmitting the data signal from the substrate 3 side to the substrate 2 side has been described, but the present invention is not limited thereto. Specifically, the light transmission system of the present invention may be configured to include the light transmission module for transmitting the data signal from the substrate 3 side to the substrate 2 side and the light transmission module for transmitting the data signal from the substrate 3 side to the substrate 2 side in plurals.

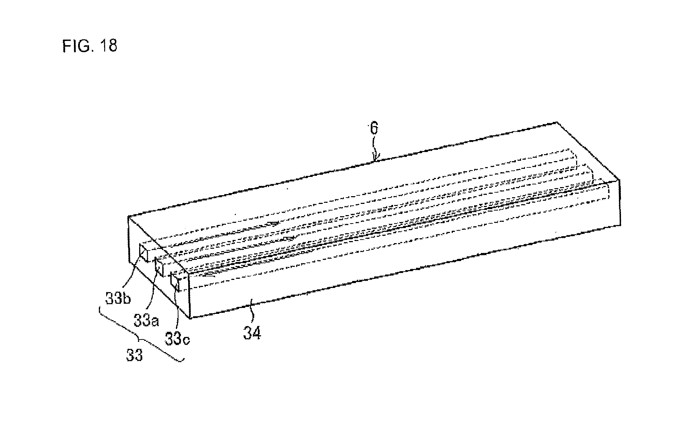

FIG. 18 is a perspective view showing one part of the light transmission path interiorly including three cores.

As shown in FIG. 18, the light transmission system of the present invention is configured by one light transmission module, where the light transmission path 6 has a configuration interiorly including a core 33a for transmitting the optical signal of the clock signal from the substrate 2 side to the substrate 3 side, a core 33b for transmitting the optical signal of the data from the substrate 2 side to the substrate 3 side, and a core 33c for transmitting the optical signal of the data from the substrate 3 side to the substrate 2 side in parallel. In other words, the following configuration may be adopted.

The present invention may relate to a light transmission module enabling bi-directional light transmission including at least a pair of cores for transmitting light bi-directionally, a light emitting portion for entering the light to the respective incident surface of the core, and a light receiving portion for receiving the light reached from the light emitting portion through the core, where the light transmission module includes a core for transmitting the clock signal in the same direction as the light transmission direction of either cores, and the bi-directional light transmission is performed in synchronization with the clock signal.

In the first to third embodiments, the serial/parallel converter is arranged since the CPU 4, the LCD drive unit 19, and the camera drive unit 20 perform the data communication with the parallel signal, and the light transmission path 6 performs the data communication with the serial signal, but the present invention is not limited thereto. For instance, as shown in FIG. 1, when the CPU 4, the LCD drive unit 19, and the camera drive unit 20 perform the data communication with the serial signal, the serial/parallel converter may not be arranged, as shown in FIG. 1. In this case, the synchronization with the clock signal of the image data signal etc. on the substrate 2, 50, 60 side is performed by the CPU 4 and the synchronization on the substrate 3 side is performed by the camera 12 and the LCD 11. A device such as IC (Integrated Circuit) having a function as the serial/parallel converter may be separately arranged. Specifically, an IC for performing the control of synchronization on the substrate 2, 50, 60 side may be separately arranged in the substrate 2, 50, 60 to communicate with the substrate 3 through the IC. Similarly, the IC for performing the control of the camera 12 and the LCD 11 may be separately arranged in the substrate 3 to communicate with the CPU 4 on the substrate 2 side through the IC.

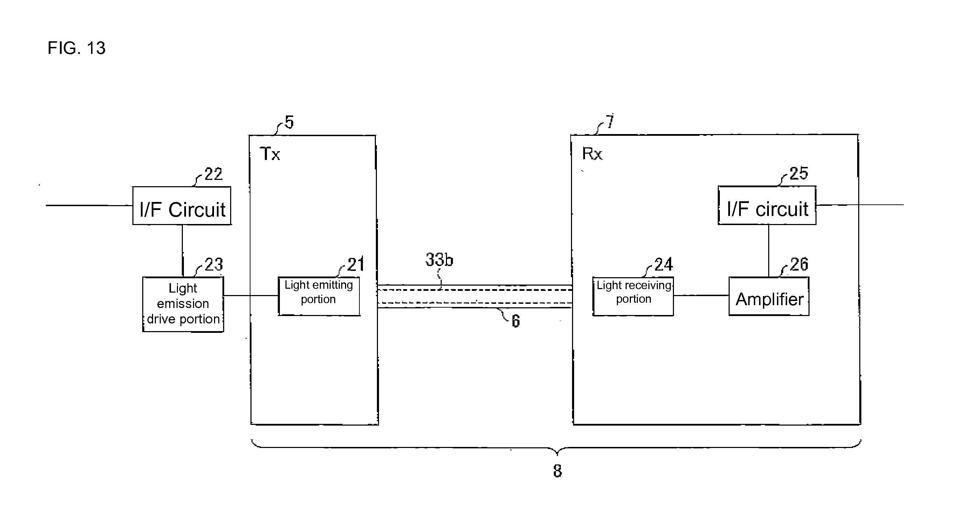

In the first to third embodiments, the light transmission processing unit 5 interiorly includes the I/F circuit 22 and the light emission drive portion 23, but the present invention is not limited thereto, and the I/F circuit 22 and the light emission drive portion 23 may be arranged exterior to the light transmission processing unit 5, as shown in FIG. 13. Furthermore, although not shown, the light transmission processing unit 5 may interiorly include the light emitting portion 21 and the light emission drive portion 23, and only the IF circuit 22 may be arranged exterior to the light transmission processing unit 5.

The light emission drive portion 23 can be arranged on the same substrate as other circuits such as the CPU 4 and the serializer 13, that is, integrated with other circuits, and thus cost and power consumption can be reduced.

Although not shown, similarly in the light reception processing unit 7, the I/F circuit 25 and the amplifier 26 may be arranged exterior to the light reception processing unit 7, or only the I/F circuit may be exteriorly arranged.

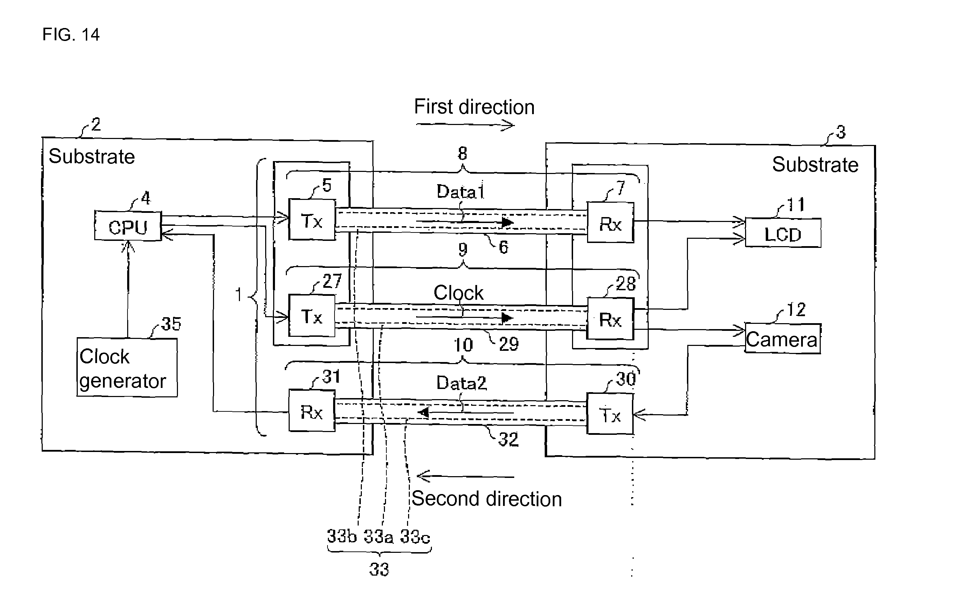

In the light transmission system 1 of the first to third embodiments, the light transmission modules 8, 9, 10 can be respectively detached or installed, but the present invention is not limited thereto. The light transmission processing units 5, 27 and the light reception processing units 7, 28 of the light transmission modules 8, 9 in which the signal is transmitted in the same direction may be respectively integrated, as shown in FIG. 14.

According to the above configuration, the light transmission modules of the same direction are integrated, and thus the light transmission path for clock signal and the light transmission path for data transmission may form a pair to be commercialized as a module. The light transmission module in the opposite direction may be combined with the integrated light transmission module in the same direction, or may be combined with the light transmission module in the same direction, and thus the optical wiring for data transmission can be freely combined irrespective of the transmission direction. A space for installing the optical wiring thus can be reduced by integrating the two light transmission modules.

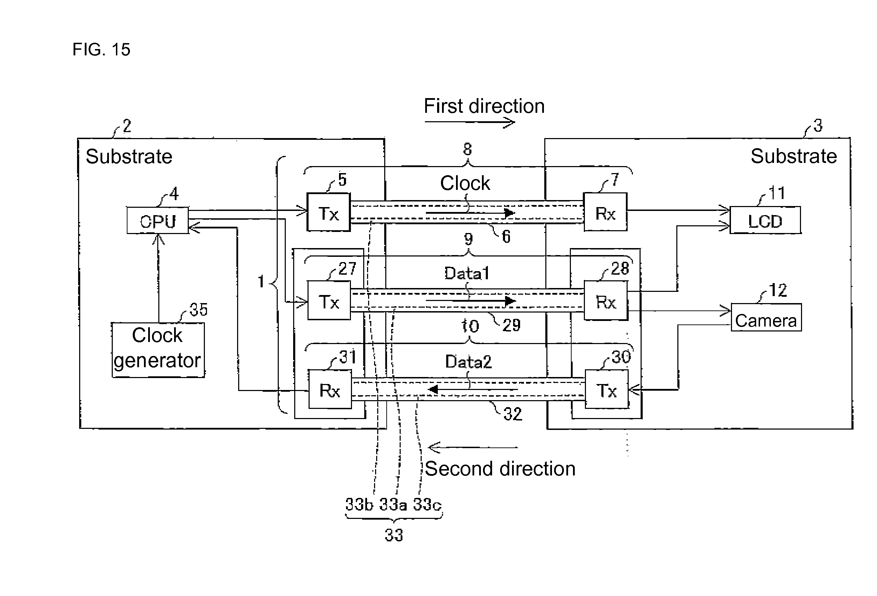

As shown in FIG. 15, the light transmission system 1 of the present invention may have a configuration in which the light transmission processing unit 27 and the light reception processing unit 31 of the light transmission modules 9, 10 in which the signals are bi-directionally transmitted are integrated, and the light reception processing unit 28 and the light transmission processing unit 30 are integrated.

According to the above configuration, the optical wirings for bi-directional communication may form a pair to be commercialized, and thus have versatility. A space for installing the optical wiring thus can be reduced by integrating the two light transmission modules.

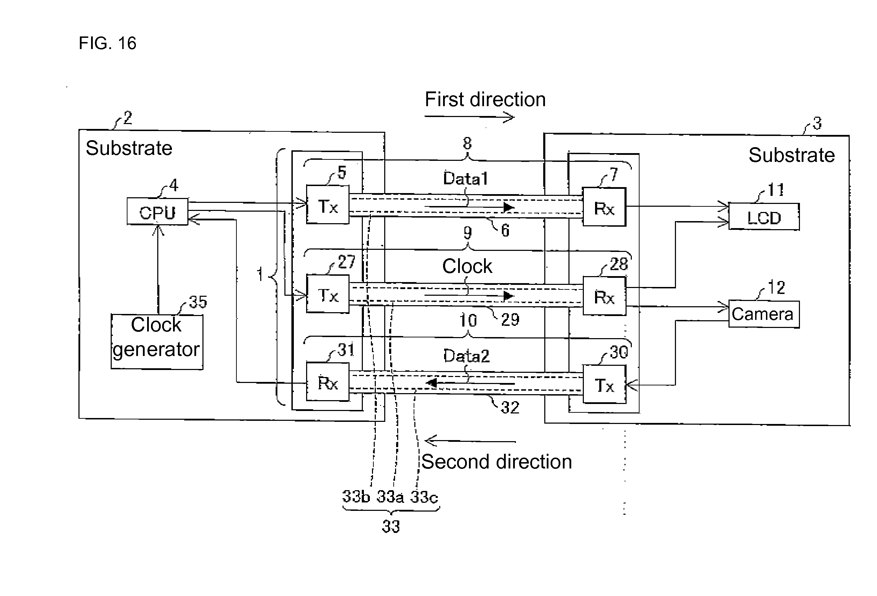

As shown in FIG. 16, the light transmission system 1 of the present invention may have a configuration in which the light transmission processing units 5, 27 and the light reception processing unit 31 of the light transmission modules 8, 9, 10 are integrated and the light reception processing units 7, 28 and the light transmission processing unti 30 are integrated.

According to the above configuration, a space for installing the optical wiring can be further reduced as three light transmission modules can be integrated.

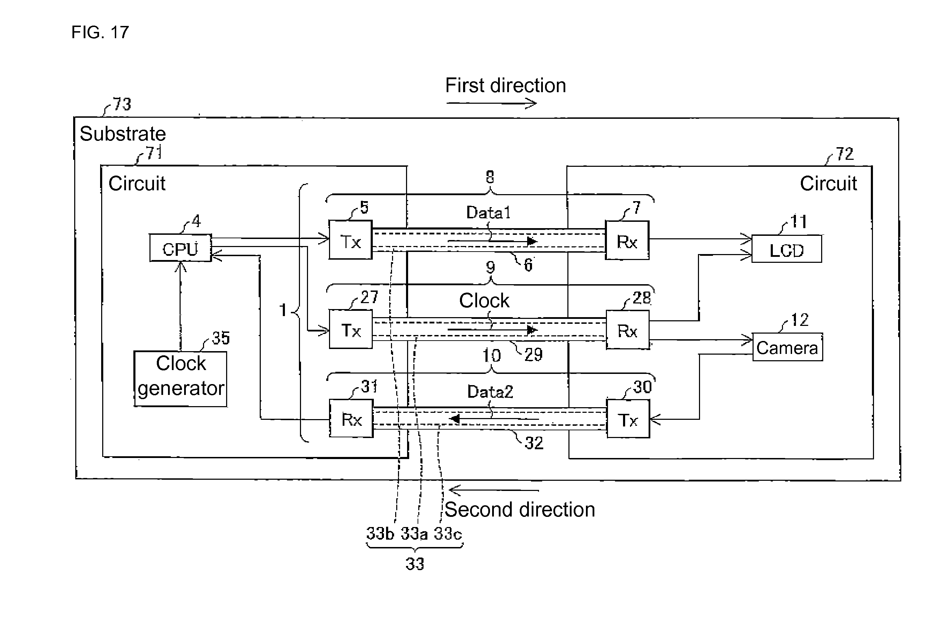

As shown in FIG. 17, the present invention may be an electronic circuit in which the substrate 2 and the substrate 3, where both data transmissions are performed by the light transmission modules 8, 9, 10, are arranged on the same substrate.

For instance, higher speed of the signal transmission speed in one substrate is expected to advance in a PC (Personal Computer) etc., and the exchange with each processor such as the CPU and the memory and image processing is also expected to be converted to light in the future. According to the above configuration, application can also be made to the above cases and not only to when the substrate is divided into two as in the foldable portable telephone described in the first to third embodiments.

### (Application Example)

The light transmission system of the present invention can also be applied to the following application examples. In the first to third embodiments, an example in which application is made to the foldable portable telephone 40 has been described as a first application example, but the light transmission system of the present invention is not limited thereto, and use can also be made to the hinge portion etc. of the foldable electronic device such as a foldable PHS (Personal Handyphone System), foldable PDA (Personal Digital Assistant), and a foldable notebook computer.

As a second application example, the light transmission system 1 can be applied to a device including a drive unit such as a reading unit in the hard disk recording/reproducing device (electronic device).

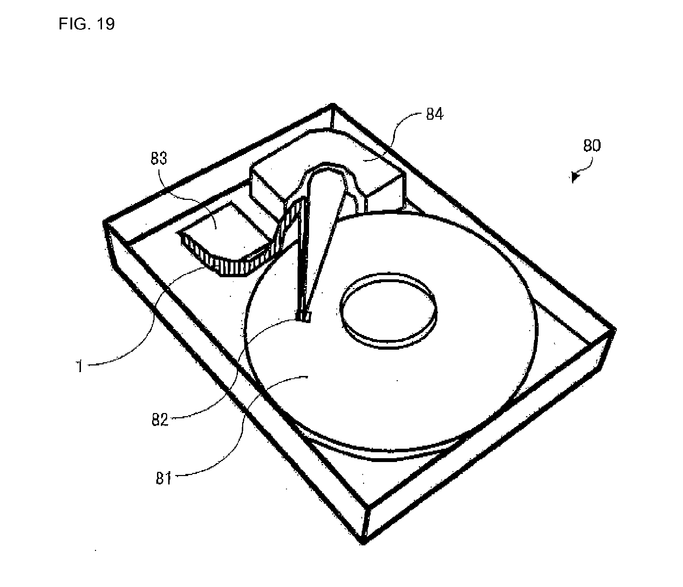

FIG. 19 shows an example in which the light transmission system 1 is applied to the hard disk recording/reproducing device 80.

As shown in the figure, the hard disk recording and reproducing device 80 includes a disk (hard disk) 81, a head (read/write head) 82, a substrate introducing portion 83, a drive portion (drive motor) 84, and the light transmission system 1.

The drive portion 84 drives the head 82 along a radial direction of the disk 81. The head 82 reads the information recorded on the disk 81 and writes information on the disk 81. The head 82 is connected to the substrate introducing portion 83 by way of the light transmission system 1, and propagates the information read from the disk 81 to the substrate introducing portion 83 as optical signal and receives the optical signal of the information to write to the disk 81 propagated from the substrate introducing portion 83.

Thus, a high speed and large capacity communication can be realized and a space for installing the optical wiring for data transfer can be reduced by applying the light transmission system 1 to the drive unit such as the head 82 of the hard disk recording/reproducing device 80. As a result, the hard disk recording/reproducing device 80 can be miniaturized.

The present invention is not limited to the above-described embodiments, and various modifications may be made within the scope of the Claims, where the embodiments obtained by appropriately combining the technical means described in the different embodiments are also encompassed in the technical scope of the present invention.

### INDUSTRIAL APPLICABILITY

The light transmission system according to the present invention is also applicable to the light communication path between various types of devices, and is also applicable to a flexible optical wiring serving as an in-device wiring mounted in a small and thin consumer device.

## Claims

1. A light transmission system for transmitting a data signal or a control signal bi-directionally by at least one light transmission module including
a light transmission path with a core made of material having translucency and
a clad made of material having an index of refraction different from an index of refraction of the core,
a light transmission unit with a light emitting portion for irradiating a light incident surface of the light transmission path with an optical signal corresponding to an electrical signal, and
a light reception unit with a light receiving portion for receiving the optical signal irradiated from the light emitting portion to the light incident surface of the core and transmitted through the core and outputting an electrical signal corresponding to the optical signal;
the light transmission system comprising:
one first core for transmitting a clock signal as the optical signal;
at least one second core for transmitting the data signal or the control signal as the optical signal in a first direction, which is a direction same as a transmission direction of the clock signal; and
at least one third core for transmitting the data signal or the control signal as the optical signal in a second direction, which is an opposite direction to the transmission direction of the clock signal;
wherein the data signal or the control signal are bi-directionally transmitted by
transmitting the data signal or the control signal to be transmitted in the first direction through the second core in synchronization with the clock signal;
transmitting the data signal or the control signal to be transmitted in the second direction through the third core in synchronization with the clock signal transmitted through the first core, and
synchronizing the data signal or the control signal transmitted through the third core with the clock signal to be transmitted in the first direction.

2. The light transmission system according to claim 1, wherein at least one light transmission path includes at least two cores out of the first core, the second core, and the third core.

3. The light transmission system according to claim 1, wherein the light emitting portion and the light receiving portion in at least two light transmission modules of the light transmission module including the first core, the light transmission module including the second core, and the light transmission module including the third core are respectively arranged in the same light transmission unit and the same light reception unit.

4. The light transmission system according to any one of claims 1 to 3, wherein when the data signal or the control signal transmitted through the third core is delayed by a time of smaller than or equal to half-cycle of the clock signal with respect to the clock signal transmitted in the first direction, the synchronization of the data signal or the control signal transmitted through the third core and the clock signal transmitted in the first direction is taken at a falling edge of the clock signal.

5. The light transmission system according to any one of claims 1 to 3, further comprising:
a clock inversion circuit for inverting a phase of the clock signal to be transmitted in the first direction when the data signal or the control signal transmitted through the third core is delayed with respect to the clock signal transmitted in the first direction;
wherein the synchronization of the data signal or the control signal transmitted through the third core and the clock signal which phase is inverted by the clock inversion circuit is taken at a rising edge of the clock signal which phase is inverted.

6. The light transmission system according to any one of claims 1 to 3, comprising:
a delay circuit for delaying the clock signal by a preset time so that the data signal or the control signal transmitted through the third core synchronizes with the clock signal to be transmitted in the first direction when the data signal or the control signal transmitted through the third core is delayed with respect to the clock signal to be transmitted in the first direction.

7. The light transmission system according to any one of claims 1 to 3, comprising:
a delay circuit for delaying the data signal or the control signal to be transmitted in the second direction by a preset time or delaying the data signal or the control signal transmitted through the third core by a preset time so that the data signal or the control signal transmitted through the third core synchronizes with the clock signal to be transmitted in the first direction when the data signal or the control signal transmitted through the third core is delayed with respect to the clock signal to be transmitted in the first direction.

8. The light transmission system according to claim 6, wherein the delay circuit includes a low pass filter and a waveform shaping circuit.

9. An electronic device comprising a light transmission system according to any one of claims 1 to 8.
